# EUROPÄISCHE PATENTSCHRIFT

(11) **EP 1 523 511 B1**
(45) Veröffentlichungstag und Bekanntmachung des Hinweises auf die Patenterteilung: **08.06.2011**
(21) Anmeldenummer: 03763804.6
(22) Anmeldetag: 11.07.2003
(51) Int. Cl.: C08G 18/10, C09D 175/04, C08J 7/04

(54) **PRIMER MIT LANGER OFFENZEIT FÜR POLYMERE UNTERGRÜNDE**
PRIMER WITH LONG CURE TIME FOR POLYMERIC SUBSTRATES
APPRET A LONG TEMPS OUVERT POUR SUBJECTILES POLYMERES

(30) Priorität: 15.07.2002 EP 02015771
(43) Veröffentlichungstag der Anmeldung: 20.04.2005
(73) Patentinhaber: Sika Technology AG, 6340 Baar (CH)
(72) Erfinder: TRABESINGER, Gerald, CH-8722 Kaltbrunn (CH); WIRZ, Thomas, CH-8048 Zürich (CH); VENETZ, Fabian, CH-5706 Boniswil (CH)
(74) Vertreter: Isler, Jörg
(86) Internationale Anmeldenummer: PCT/EP2003/007506
(87) Internationale Veröffentlichungsnummer: WO 2004/007585

(56) Entgegenhaltungen:
- EP-A- 1 149 856
- EP-A- 1 172 424
- WO-A-94/29390
- US-A- 5 223 575

## Beschreibung

### Technisches Gebiet

Die Erfindung betrifft Primer mit langen Offenzeiten sowie einer guten Haftung für problematische polymere Untergründe.

### Stand der Technik

Klebstoffe, Beschichtungen, Dichtstoffe, Bodenbelägen und andere Systeme basieren auf reaktiven Bindemitteln. Die Haftung dieser reaktiven Systeme auf diversen Untergründen ist vielfach mangelhaft. Deshalb werden in der Technik vielfach sogenannte 'Primer' eingesetzt. Ein Primer bildet eine Haftbrücke zwischen dem Untergrund und dem eingesetzten Binder. Ein Primer ist ebenfalls ein chemisch reaktives System und wird auf den Untergrund appliziert. Um einen Haftungsaufbau des Primers mit dem Untergrund zu erhalten, muss der Primer eine gewisse Zeit, der sogenannten 'Ablüftezeit', zur Verfügung stehen, um einen Film zu bilden und zumindest teilweise zu vernetzen, bevor der Klebstoff oder ein anderes reaktives System appliziert werden kann. Die Applikation dieses Systems jedoch ist beschränkt, während der sogenannten 'Offenzeit', in welcher der die Haftung zum Primer noch gewährleistet ist. Beim Überschreiten der Offenzeit ist eine Haftung auf dem Primer nicht mehr gewährleistet. Die Offenzeit wird somit in Versuchen ermittelt, bei denen unterschiedlich lange Zeit zwischen Auftrag des Primers und des Klebstoffs eingehalten werden und die Haftung der Verklebungen nach Aushärten des Klebstoffs ermittelt wird. Modellhaft wird die Haftung zwischen Primer und Klebstoff oder einem anderen reaktiven System durch eine Reaktion zwischen diesen Materialien aufgebaut. Um eine schnelle und kosteneffiziente Verarbeitung zu gewährleisteten, muss in einer technischen, industriellen Anwendung die Ablüftezeit möglichst kurz sein. Das heisst, der Haftungsaufbau des Primers mit dem Untergrund muss möglichst schnell erfolgen, so dass eine Applikation eines Klebstoff oder eines anderen reaktiven Systems möglichst schnell erfolgen kann. Hierbei tritt jedoch das Problem auf, dass der Fertigungsprozess aufgrund von beispielsweise technischer Störungen, Schichtende oder Wochenende unterbrochen wird, so dass zwischen Primerauftrag und Auftrag des Klebstoffs oder anderen reaktiven Systems eine längerer Zeit von einigen Stunden bis Tage oder gar Wochen verstreichen kann. Dies ist besonders störend in kontinuierlich ablaufenden industriellen Anwendungen. Weiterhin besteht im Automobilbau der Trend zur Verlagerung der Vorbehandlung weg von der industriellen Fertigungslinie hin ins Werk des Zulieferers, so dass zwischen dem Primerauftrag im Werk des Zulieferers bis zum Auftrag des Klebstoffs im Fertigungswerk eine Offenzeit von bis zu einigen Wochen verstreichen könnte.

Um auch in diesen Fällen eine gute Haftung zu gewährleistet, besteht ein grosses Bedürfnis nach Primern mit langen Offenzeiten.

Weiterhin sind Kunststoffe immer mehr als Untergründe anzutreffen. Kunststoffe kommen vor allem wegen ihrer Leichtigkeit und der fehlenden Korrosion zum Einsatz. Kunststoffe sind allerdings in Bezug auf Haftung von beispielsweise Klebstoffen vielfach problematisch. Speziell für 1-komponentige Polyurethanklebstoffe hat sich dies bei den Werkstoffen aus ABS (Acrylnitril/Butadien/Styrol), EP-GFK (Epoxy-Glasfaserverstärkte Kunststoffe), Polyester-GFK (PES-GFK; Polyester-Glasfaserverstärkte Kunststoffe), Poly(methylmethacrylat) (PMMA) sowie Polycarbonat (PC) gezeigt. Als besonders problematisch hat sich diesbezüglich PDMS-PC und PDMS-PMMA erwiesen. Bei diesen Werkstoffen handelt es sich um ein Polycarbonat respektive um ein Poly(methylmethacrylat), welches mit einer Polydimethylsiloxan-basierenden Beschichtung versehen worden ist. PDMS-PC und PDMS-PMMA weisen einerseits die Eigenschaft auf, dass sie sehr kratzresistent und andererseits sehr hydrophob sind. Aufgrund dieser Eigenschaften werden diese Werkstoffe immer häufiger im Automobilbau und Schiffsbau eingesetzt. Infolge des hydrophoben Charakters sind jedoch bisher den Anwendungen, wo eine Haftung mit einem reaktiven System, wie beispielsweise einem Klebstoffe, benötigt werden, Grenzen gesetzt.

Polyisocyanat-basierende Primer sind seit langem bestens bekannt.

US 6,153,699 beschreibt einen Primer, der neben einem siliconmodifizierten Acrylat ein Polyisocyanat enthält. Als bevorzugtes Polyisocyanat werden Addukte von Hexamethylendiisocyanat (HDI) und Toluoldiisocyanat (TDI) genannt. Dieser Primer weist eine besonders gute Haftung auf Polyvinylchlorid (PVC) auf. Auf den schwierig zu verklebenden Untergründen wie PDMS-PC ist die Haftvermittlung jedoch ungenügend. Zudem verfügen Polyacrylat- und Polyester-basierende Primer vielfach über eine ungenügende Benetzung und über ungenügende Haftung auf Kunststoff-Untergründen, wie z.B. ABS und PC.

US 5,576,558 beschreibt einen Primer für 40%-gefülltes Polypropylen oder schwer verklebbare Automobillacke. Der Primer enthält neben Isocyanaten ein anorganisches Phosphat. Infolge der verwendeten schnellen aromatischen Isocyanaten ist dieser Primer ungeeignet für lange Offenzeiten, da die verwendeten Isocyanate relativ schnell mit der Luftfeuchtigkeit abreagieren.

EP 1'172'424 A1 beschreibt einen Primer für lange Offenzeiten und Haftung auf Glas und Silicon-Hardcoats. Die genaue Natur dieses Silicon-Hardcoats ist jedoch nicht näher beschrieben. Der Primer enthält neben einem Acrylatharz, einem Epoxyharz und Russ ein Addukt aus Amino- und Dialkoxy-/ Trialkoxysilangemisch. Das Silan-Addukt ist in einer sehr grossen Menge von 10 -35 %, bezogen auf das Gewicht des Primers, vorhanden. Eine solch grosse Konzentration ist für einen solchen Primer notwendig, um einen Haftungsaufbau zu gewährleisten. Die hohe Konzentration des Silan-Adduktes führt jedoch dazu, dass ein solcher Silan-basierender Primer nicht geeignet für Polyurethanklebstoffe ist, weil zwar für den Aufbau einer genügend guter Haftung auf Glas grosse Mengen an Alkoxysilangruppen benötigt werden, welche dann aber bei der Hydrolyse niedermolekulare Alkohole wie Ethanol oder Methanol abspalten. Der gebildete primäre Alkohol reagiert wiederum mit Isocyanatgruppen eines Polyurethan-Klebstoffes, wodurch diese nicht mehr zur Verfügung stehen weder für eine Reaktion mit dem Primer noch für die Aushärtung des Klebstoffes und somit an der Grenzfläche Primer/Klebstoff zu mangelhafter Mechanik des Klebverbundes führt.

Mit dem Stand der Technik ist es bisher nicht möglich, einen Primer zu erhalten, welcher gleichzeitig gute Haftung auf problematischen polymereren Untergründen aufweist und eine lange Offenzeit aufweist.

### Darstellung der Erfindung

Es ist die Aufgabe dieser Erfindung, die beschriebenen Nachteile und Probleme der Primer für organische Polymere zu überwinden und einen Primer zur Verfügung zur stellen, welcher gleichzeitig gute Haftung auf problematischen polymereren Untergründen aufweist und eine lange Offenzeit aufweist. Unerwartet wurde gefunden, dass die Nachteile des Standes der Technik durch die erfindungsgemässe Primerzusammensetzung gemäss Anspruch 1 behoben werden konnten. Gleichzeitig ist auch eine gute Haftung bei kurzen Ablüftezeiten beziehungsweise bei kurzen Wartezeiten zwischen Applikation des Primers und des Klebstoffs gewährleistet.

Die vorliegende Erfindung betrifft eine Primerzusammensetzung enthaltend mindestens ein Polyurethanprepolymer **A** mit Isocyanatendgruppen, mindestens ein aliphatische Polyisocyanat **B,** mindestens ein aromatisches Polyisocyanat **C** sowie mindestens ein Reaktionsprodukt **D,** welches erhältlich aus mindestens einem Epoxysilan und mindestens einem Aminosilan oder aus mindestens einem Epoxysilan und mindestens einem Mercaptosilan ist.

### Weg zur Ausführung der Erfindung

Die vorliegende Erfindung betrifft eine Primerzusammensetzung enthaltend mindestens ein Polyurethanprepolymer **A** mit Isocyanatendgruppen, mindestens ein aliphatische Polyisocyanat **B,** mindestens ein aromatisches Polyisocyanat **C** sowie mindestens ein Reaktionsprodukt **D,** welches erhältlich aus mindestens einem Epoxysilan und mindestens einem Aminosilan oder aus mindestens einem Epoxysilan und mindestens einem Mercaptosilan ist.

'Polyol' und 'Polyisocyanat' beschreibt hierbei und im Folgenden, dass die Anzahl der jeweiligen funktionellen Gruppen 2 oder grösser ist.

Das Polyurethanprepolymer **A** wird aus mindestens einem Polyol und mindestens einem Polyisocyanat hergestellt. Die Umsetzung des Polyols mit einem Polyisocyanat kann dadurch erfolgen, dass das Polyol und das Polyisocyanat mit üblichen Verfahren, beispielsweise bei Temperaturen von 50 bis 100°C, gegebenenfalls unter Mitverwendung geeigneter Katalysatoren und/oder bei Raumtemperatur nicht mit Isocyanaten reaktiven Lösungsmitteln, zur Reaktion gebracht werden, wobei das Polyisocyanat im stöchiometrischen Überschuss eingesetzt wird. Als Reaktionsprodukt entsteht das Polyurethanprepolymer **A** mit Isocyanatendgruppen.

Die für die Prepolymerherstellung eingesetzten Polyole sind solche, wie sie in der Polyurethanchemie üblicherweise verwendet werden. Neben Hydroxygruppen-enthaltenden Polyacrylaten, Polyestern, Polycaprolactonen und aus PET(Polyethylenterephthalat) gewonnenen PET-Polyolen, sind von besonderem Interesse als Polyole die Polyoxyalkylenpolyole, insbesondere Polyoxypropylenpolyole, vorzugsweise Polyoxypropylendiole oder -triole. Bevorzugte Polyoxyalkylenpolyole werden aus Ethylenoxid und/oder 1,2-Propylenoxid polymerisiert. Das Molekulargewicht der Polyole beträgt typischerweise vorteilhaft 250 - 20'000 g/mol, insbesondere 500 - 10'000 g/mol. Bevorzugt werden Polyole mit einem Molekulargewicht von 800 - 4'000 g/mol eingesetzt. Unter 'Molekulargewicht' oder 'Molgewicht' versteht man hierbei und im Folgenden stets das Molekulargewichtsmittel M_{w}.

Das für die Herstellung des Polyurethanprepolymers **A** verwendete Polyisocyanat ist ein aromatisches oder ein aliphatisches Polyisocyanat. Unter 'aromatisches Polyisocyanat' wird hierbei ein Polyisocyanat verstanden, bei welchem die Isocyanat- (=NCO-) Gruppe direkt an einem aromatischen Grundkörper, vorteilhaft einem C6-Ring, hängt, während unter einem 'aliphatisches Polyisocyanat' ein solches Polyisocyanat verstanden wird, bei welchem die NCO-Gruppe nicht direkt an einem aromatischen Grundkörper hängt. Es gibt jedoch auch Polyisocyanate, speziell Umsetzungsprodukte von Mischungen aus aliphatischen als auch aromatischen Polyisocyanaten, welche in demselben Molekül sowohl aromatische als auch aliphatische NCO-Gruppen aufweisen. Solche Moleküle werden hierbei sowohl als aromatische als auch aliphatische Polyisocyanate klassiert.

Für die Herstellung des Polyurethanprepolymeren **A** kommen besonders die Polyisocyanate aus der folgenden Liste in Betracht:
2.4- und 2,6-Toluylendüsocyanat (TDI) und beliebige Gemische dieser Isomeren; 4,4'-Diphenylmethandiisocyanat (MDI), die stellungsisomeren Diphenylmethandiisocyanate; Di- und Tetraalkyl-Diphenylmethandiisocyanate; 4,4'-dibenzyldiisocyanat, 1,3- und 1,4-Phenylendiisocyanat; die Isomeren des Naphtylenediisocyanates, Xylylenediisocyanates, Triphenylmethantriisocyanates, und deren Isomerenmischungen; Tris(p-isocyanatophenyl)thiophosphat (erhältlich z.B. als Desmodur RFE von Bayer);
Hexamethylendiisocyanat (HDI), 2,2,4- und 2,4,4-Trimethyl-1,6-hexamethylendiisocyanat, Tetramethoxybutane-1,4-diisocyanat, Butane-1,4-diisocyanat, Dicyclohexylmethandiisocyanat, Cyclohexan-1,3- und 1,4-diisocyanat, 1,12-Dodecamethylendiisocyanat, Diisocyanate von dimeren Fettsäuren; Lysine methylester diisocyanat, 1-Isocyanato-3,3,5-trimethyl-5-isocyanatomethyl-cyclohexan (=Isophorondiisocyanat oder IPDI), hydriertes Diphenylmethandiisocyanat, hydriertes 2,4- und 2,6-Toluylendiisocyanat;
Oligo-, Poly- oder Copolymere dieser Monomere, wie polymeres HDI, polymeres MDI, beispielsweise kommerziell erhältlich als Voranate M-580 (Dow), oder Biurete, Uretdione und Isocyanurate dieser Monomere, insbesondere HDI Biurete, wie beispielsweise kommerziell erhältlich als Desmodur N-100 (Bayer), Luxate HDB 9000 (Lyondell), HDI Trimere, wie beispielsweise kommerziell erhältlich als Desmodur N-3300 (Bayer), Desmodur N-3600 (Bayer), Luxate HT 2000 (Lyondell), HDI Dimere, wie beispielsweise kommerziell erhältlich als Desmodur N-3400 (Bayer), Luxate HD 100 (Lyondell), IPDI Trimer, wie beispielsweise kommerziell erhältlich als Desmodur Z 4470 (Bayer), Vestanat T 1890/100 (Hüls), Luxate IT 1070 (Lyondell), TDI-Trimer, wie beispielsweise kommerziell erhältlich als Desmodur IL (Bayer), TDI Addukte, wie beispielsweise kommerziell erhältlich als Desmodur L (Bayer), TDI-/HDI polymer, wie beispielsweise kommerziell erhältlich als Desmodur HL (Bayer), Polurene IK D (Sapici), Hartben AM 30 (Benasedo), polymeres MDI

Für Primer, welche in Bereichen eingesetzt werden, wo Flammschutz respektive Flammhemmung von Wichtigkeit sind, können halogenierte Polyisocyanate vorteilhaft eingesetzt werden.

Die Primerzusammensetzung umfasst weiterhin mindestens ein aliphatisches Polyisocyanat **B.** Bevorzugt sind aliphatische Polyisocyanate ausgewählt aus der obigen Liste der Polyisocyanate für die Herstellung des Prepolymeren **A.** Besonders bevorzugt sind aliphatisch NCO-gruppentragende Isocyanurate **B1** oder aliphatisch NCO-gruppentragende Biurete **B2.** Unter ,aliphatisch NCO-gruppentragend' wird verstanden, dass die NCO Gruppe nicht direkt an einem aromatischen Grundkörper hängt. Bevorzugt als aliphatisch NCO-gruppentragende Isocyanurate **B1** sind IPDI-Isocyanurate, wie beispielsweise IPDI Trimer, wo formell drei Moleküle IPDI unter Bildung eines Isocyanurates miteinender verbunden werden, so dass formell pro Molekül drei NCO-Gruppen frei bleiben.

Bevorzugt als aliphatisch NCO-gruppentragende Biurete **B2** sind HDI-Biurete, wie beispielsweise HDI-Biurete, bei denen formell drei Moleküle HDI miteinander unter Bildung eines Biurets reagieren, so dass formell pro Molekül drei NCO-Gruppen frei bleiben.

In einer besonders bevorzugten Ausführungsform ist in der Primerzusammensetzung gleichzeitig mindestens ein NCO-gruppentragendes Isocyanurat **B1** und mindestens ein aliphatisch NCO-gruppentragendes Biuret **B2** vorhanden.

Die Primerzusammensetzung umfasst weiterhin mindestens ein aromatisches Polyisocyanat **C.** Bevorzugt sind aromatische Polyisocyanate ausgewählt aus der obigen Liste der Polyisocyanate für die Herstellung des Prepolymeren **A.** Besonders bevorzugt sind aromatisch NCO-gruppentragende Isocyanurate. Unter ,aromatisch NCO-gruppentragend' wird verstanden, dass die NCO Gruppe direkt an einem aromatischen Grundkörper hängt. Insbesondere besonders bevorzugt sind aromatisch NCO-gruppentragende Isocyanurate, welche aus Toluoldiisocyanat und Hexamethylendiisocyanat hergestellt werden, wie beispielsweise das Isocyanurat, welches formell aus einem Molekül HDI und vier Molekülen TDI unter Bildung von zwei Isocyanurat Gruppen und vier verbleibende aromatische NCO-Gruppen, entsteht.

Die Primerzusammensetzung umfasst weiterhin mindestens ein Reaktionsprodukt **D** erhältlich aus mindestens einem Epoxysilan und mindestens einem Aminosilan oder mindestens aus einem Epoxysilan und mindestens einem Mercaptosilan. Unter einem 'Epoxysilan' wird ein Epoxygruppen-tragendes Silan, unter einem ,Aminosilan' wird ein Silan, welches Aminogruppen trägt, und unter einem 'Mercaptosilan' wird ein Silan, welches Mercaptogruppen trägt, verstanden.

Die Herstellung des Reaktionsprodukt **D** kann erfolgen, indem das Epoxysilan mit einem Aminosilan oder mit einem Mercaptosilan unter Ausschluss von Feuchtigkeit zur Reaktion gebracht wird. Bei der Reaktion ist hierbei darauf zu achten, dass für die eingesetzten Mengen der Reaktionspartner das Verhältnis der aktiven-Aminwasserstoffe oder Mercaptogruppen in Bezug auf die Epoxygruppen von grosser Wichtigkeit ist.

Vorteilhaft beim Aminosilan/Epoxysilan-Addukt bewegt sich hierbei das Verhältnis von Anzahl aktiven-Aminwasserstoffe / Anzahl Epoxygruppen = 3:1 - 1:3. Bevorzugt wird ein Verhältnis von 2:1 - 1:1.5. Als besonders vorteilhaft ist das Verhältnis von etwa 2:1 - etwa 1:1.

Vorteilhaft beim MercaptosilaNEpoxysilan-Addukt bewegt sich hierbei das Verhältnis von Anzahl Mercaptogruppen / Anzahl Epoxygruppen = 1.5:1 - 1:1.5. Bevorzugt wird ein Verhältnis von 1.2:1 - 1:1.2. Als besonders vorteilhaft ist das Verhältnis von etwa 1:1, so dass die Reaktion in etwa stöchiometrisch abläuft.

Geeignet als Epoxysilan für die Herstellung des Reaktionsproduktes **D** sind vor allem Epoxydimethoxymethylsilane, Epoxytrimethoxysilane oder Epoxytriethoxysilane, insbesondere 3-Glycidyloxypropylmethyldimethoxysilan, 2-(3,4-Epoxycyclohexyl)ethylmethyldimethoxysilan. Bevorzugt sind Epoxytrimethoxysilane und Epoxytriethoxysilane, insbesondere 3-Glycidyloxypropyltrimethoxysilan, 3-Glycidyloxypropyltriethoxysilan oder 2-(3,4-epoxycyclohexyl)-ethyltrimethoxysilan. Besonders bevorzugt ist 3-Glycidyloxypropyltrimethoxysilan.

Als Mercaptosilan geeignet für die Herstellung des Reaktionsproduktes **D** sind 2-Mercaptoethyltriethoxysilan, 3-Mercaptoethylmethyldimethoxysilan, 3-Mercaptopropyldimethylmethoxysilan, 3-Mercaptopropylethyldiethoxysilan, 3-Mercaptopropylethyldimethoxysilan, 3-Mercaptopropylmethyldiethoxysilan, 3-Mercaptopropylmethyldimethoxysilan, 3-Mercaptopropyltriethoxysilan, 3-Mercaptopropyltrimethoxysilan, bevorzugt 3-Mercaptopropyltriethoxysilan, 3-Mercaptopropyltrimethoxysilan, insbesondere 3-Mercaptopropyltrimethoxysilan.

Als Aminosilane geeignet für die Herstellung des Reaktionsproduktes **D** sind besipielsweise Aminodiethoxymethylsilan, Aminodimethoxymethylsilan, Amino- trimethoxysilan oder ein Amino- triethoxysilan. Geeignete Beispiele für Aminosilane sind 3-Aminoisobutyltrimethoxysilan, 3-Aminopropyltrimethoxysilan, Bis(trimethoxysilylpropyl)amin, N-(2-Aminoethyl)-3-amino-2-methylpropyltrimethoxysilan, N-(2-Aminoethyl)-3-aminopropyltrimethoxysilan, N-(2-Aminoethyl)aminomethyl-trimethoxysilan, N-(n-butyl)-3-aminopropyltrimethoxysilan, N-Methyl-3-aminopropytrimethoxysilan, N-phenyl-3-aminopropyltrimethoxysilan, 3-Aminopropyltriethoxysilan, Aminomethyltriethoxysilan, N-Aminoethyl-3-aminopropyltriethoxysilan, 3-Aminopropylmethyldiethoxysilan, 3-Aminopropylmethyldimethoxysilan, 3-Aminomethyldiethoxysilan, N-(2-aminoethyl)-3-aminopropylmethyldimethoxysilan, N-aminoethyl-3-aminopropylmethyldimethoxysilan oder N-aminoethyl-3-aminopropylmethyldiethoxysilan.

Insbesonders geeignet sind Trimethoxysilane mit primären Aminogruppen oder Triethoxysilane mit primären Aminogruppen. Besonders bevorzugt sind 3-(2-Aminoethylamino)-propyltrimethoxysilan oder 3-Aminopropyltrimethoxysilan.

Besonders bevorzugt wird das Reaktionsprodukt **D** aus 3-Glycidyloxy-propyl-trimethoxysilan und 3-Aminopropyltrimethoxysilan hergestellt.

Die Menge des Reaktionsproduktes **D** ist hierbei so zu wählen, dass der Anteil im Bereich von 0.5 - 15 Gewichts-%, insbesondere 2 - 10 Gewichts-%, bezogen auf die Gewichtssumme **A+B+C+D,** beträgt. Bei geringerem Anteil ist die Haftung ungenügend, während bei grösserem Anteil die Primerzusammensetzung nicht genügend lagerstabil ist.

Gemäss einer Ausführungsform enthält die Primerzusammensetzung zusätzlich mindestens ein bei Raumtemperatur nicht mit NCO reaktives Lösungsmittel. Es handelt sich hierbei vor allem um Ketone, Ester, Ether, aliphatische Kohlenwasserstoffe, aromatische Kohlenwasserstoffe, halogenierte Kohlenwasserstoffe sowie N-alkylierte Lactame.

Als Ketone eignen sich vor allem Acetonylaceton, Mesityloxid, cyclische Ketone und Dialkylketone. Cyclische Ketone mit Ringgrössen von 5 bis 9 sind als cyclische Ketone besonders geeignet, insbesondere Methylcyclohexanon und Cyclohexanon.

Bevorzugte Dialkylketone sind Ketone mit C1- bis C6-Alkylsubstituenten, wobei die Alkylsubstituenten gleich oder verschieden sein können. Bevorzugt sind Aceton, Diisobutylketon, Diethylketon, Dipropylketon, Methylamylketon, Methylbutylketon, Methylpropylketon, Methylethylketon (MEK), n-Hexylmethylketon.

Als Ester sind bevorzugt Alkylcarbonsäureester mit C1- bis C6-Alkylsubstituenten, bevorzugt Acetate, insbesondere Ethylacetat, Propylacetat, Isopropylacetat, Butylacetat, Isobutylacetat Hexylacetat oder Amylacetat; Butyrate, insbesondere Isobutylisobutyrat; Propionate, insbesondere Ethylpropionat; Formiate, Malonate, insbesondere Dimethylmalonat oder Diethylmalonat. Diethylmalonat und Dimethylmalonat weisen zudem eine stabilisierende Wirkung auf Zinnorganische Katalysatoren auf.

Als Ether sind bevorzugt Ketonether, Esterether und Dialkylether mit C1- bis C6- Alkylsubstituenten, wobei die Alkylsubstituenten gleich oder verschieden sein können, insbesondere Diisopropylether, Diethylether, Dibutylether, Diethylenglycoldiethylether sowie Ethylenglycoldiethylether.

Als Ketonether sind bevorzugt Acetalethylether, Acetonylmethanolether und Methylethoxyethylether.

Als Esterether sind bevorzugt Diethylenglycolbutyletheracetat, Ethylenglycolbutyletheracetat, Diethylenglycolethyletheracetat, Ethylenglycolethyletheracetat, 3-Methoxybutylacetat, Diethylenglycolmethyletheracetat, Ethylenglycolmethyletheracetat.

Als aliphatische oder aromatische Kohlenwasserstoffe sind beispielsweise Toluol, Xylol, Heptan, Octan sowie unterschiedliche Erdölfraktionen wie Naphta, White Spirit, Petrolether, Benzin etc. geeignet.

Als halogenierte Kohlenwasserstoffe sind beispielsweise Methylenchlorid, Ethylenchlorid, Trichloroethylen, Perchloroethylen, Chloroform, Ethylentrichlorid, Brombenzol, Chlorbenzol sowie Dichlorbenzol geeignet.

Als N-alkylierte Lactame ist bevorzugt N-Methylpyrrolidon (NMP).

Besonders bevorzugt ist das Lösungsmittel ausgewählt aus der Gruppe Methylethylketon, Aceton, Ethylacetat, Butylacetat, Hexylacetat und Diethylmalonat.

Weiterhin kann die Primerzusammensetzung zusätzlich mindestens einen Katalysator für die Reaktion der Isocyanatgruppen enthalten. Dieser Katalysator ist vorzugsweise eine zinnorganischer Katalysator, insbesondere ausgewählt aus der Gruppe Dibutylzinndilaurat, Dibutylzinndichlorid, Zinn-Thioesterkomplexe, Mono-n-butylzinntrichloride, Di-n-butylzinnoxid, Di-n-butylzinndiacetat, Dibutylzinncarboxylat. Beispiele für geeignete nichtzinnorganische Katalysatoren sind Bi(II)-octoat, Bi(II)-neodecanoat, Zn(II)-2-ethylhexanoat.

Zusätzlich zu der Primerzusammensetzung können weitere Haftvermittler, insbesondere Silane beigegeben werden. Vorteilhaft handelt es sich um Silane ausgewählt aus der Gruppe 3-Glycidyloxypropyltrimethoxysilan, 3-Glycidyloxypropyltriethoxysilan, 2-(3,4-epoxycyclohexyl)-ethyltrimethoxysilan, 3-Ureidopropyltriethoxysilan, 3-(4,5-Dihydroimidazolyl)propyl-triethoxysilan, 3-Methacryloxypropyltrimethoxysilan (monomerisch oder polymerisiert), Vinyltrimethoxysilan (monomerisch oder polymerisiert), Vinyltriethoxysilan (monomerisch oder polymerisiert), Vinyltris(2-methoxyethoxy)silan (monomerisch oder polymerisiert), 1,3,5-tris[3-(Trimethoxysilyl)propyl]-1,3,5-triazine-2,4,6(1H,3H,5H)-trion, Methyltrimethoxysilan, Methyltriethoxysilan, Trimethoxypropylsilan, Triethoxypropylsilan, 2-Methylpropyltrimethoxysilan, Triethoxyisobutylsilan, Octyltrimethoxysilan, Octyltriethoxysilan, Hexadecyltrimethoxysilan, Cyclohexyldimethoxymethylsilan, 3-Isocyanatopropyltrimethoxy-silan, 3-Isocyanatopropyltriethoxysilan, 3-Methacryloxypropyltriethoxysilan (monomerisch oder polymerisiert). Besonders bevorzugt sind 3-Glycidyloxypropyltrimethoxysilan und 3-Glycidyloxypropyltriethoxysilan.

Weiterhin können in der Primerchemie übliche Füllstoffe und Additive eingesetzt werden. Beispiele nicht limitierender Art hierfür sind Kieselsäuren, Talk, Russ, Stabilisatoren, Bentone, chemische und physikalische Trocknungsmittel.

Die beschriebene Zusammensetzung wird hergestellt und aufbewahrt unter Ausschluss von Feuchtigkeit.

Die Primerzusammensetzung eignet sich als Primer für diverse Untergründe. Besonders geeignet ist er für Glas, Glaskeramiken, Metalle und Legierungen sowie diverse Kunststoffe. Als bevorzugte Kunststoffe seien insbesondere ABS, PVC, PES-GFK, EP-GFK, PMMA, PC, PDMS-PC, PDMS-PMMA sowie Lacke genannt. Die erfindungsgemässe Primerzusammensetzung eignet sich speziell gut für PDMS-PC oder PDMS-PMMA als Untergrund. Die diversen Untergründe werden vor der Applikation vorteilhafterweise vorbehandelt. Solche Vorbehandlungsmethoden beinhalten physikalische und/oder chemischen Vorbehandlung, beispielsweise Schleifen, Sandstrahlen, Bürsten oder dergleichen, oder durch Behandeln mit Reinigern, Lösungsmitteln, Haftvermittlern, Haftvermittlerlösungen.

Der Primer wird mittels Pinsel, Filz, Tuch oder Schwamm auf ein Substrat aufgetragen. Dieser Auftrag kann manuell oder automatisch, insbesondere mittels Roboter, erfolgen. Weiterhin können auch mehrere Schichten der Primerzusammensetzung appliziert werden.

Die Primerzusammensetzung wird vorteilhaft als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden vewendet. Bevorzugte Einsatzgebiete dieser Primer sind Gebiete, wo auch industriell gefertigte Komponenten verklebt werden. Es handelt sich insbesondere um Anwendungen, wo der Primer im Werk eines Zulieferanten appliziert wird.

### Beispiele

Die folgenden Beispiele sind typische Beispiele zur Illustration der Erfindung.

### Herstellung des Prepolymeren PREP1

Es wurde eine 5-Hals-Glasapparatur verwendet, welche mit einem motor-betriebenen Rührer, einem N₂-Anschluss, einem Temperaturfühler, einem Rückflusskühler und einem Tropftricher ausgestattet war. Alle im folgenden beschriebenen Reaktionen wurden unter Stickstoff durchgeführt.

531.6g Desmodur HL wurde in 212.1 g Methylethylketon gelöst. Nach leichtem Erwärmen wurde 44.2 g Voranol P-1010 (Polypropylenglycol, mittleres Molekulargewicht 1000 g/mol, erhältlich von Dow), in 212.1g MEK gelöst, langsam über den Tropftrichter zur Isocyanat-Lösung zugetropft. Nach Beendigung des Zutropfens wurde noch weitere 5 Stunden gerührt. Das Reaktionsende wurde durch Messen der NCO-Konzentration ermittelt.

### Herstellung des Primers

Die Primer *PR1* bis *PR8* wurden gemäss der Zusammensetzung in Tabelle 1 hergestellt.

Für die Herstellung wurde wie folgt vorgegangen: das Prepolymer vorgelegt, anschliessend gegebenenfalls das aliphatische Isocyanurat zugegeben und gewartet bis es gelöst war. Anschliessend wurde gegebenenfalls das aliphatische Biuret sowie gegebenenfalls das aromatische Iscocyanurat hinzugegeben. Über eine Schlauchquetschpumpe wurde anschliessend das Addukt *AD1* von 3-Aminopropyltrimethoxysilan und 3-Glycidyloxypropyltrimethoxysilan (molares Verhältnis = 1 : 1.32) langsam zur Lösung hinzugetropft. Schliesslich wurde die Lösung noch mit MEK, wie in Tabelle 1 angegeben, verdünnt.

**Tabelle 1. Beispiele Zusammensetzungen**

| Beispiel | *PR1* | *PR2* | *PR3* | *PR4* | *PR5* | *PR6* | *PR7* | *PR8* |
|---|---|---|---|---|---|---|---|---|
| Prepolymer *PREP1* [g] | 800 | 800 | 800 | 800 | 800 | 800 | 800 | 800 |
| Desmodur N-100 [g] | 0 | 420 | 0 | 130 | 0 | 420 | 0 | 130 |
| Vestanat T1890/100 [g] | 0 | 0 | 0 | 100 | 0 | 0 | 0 | 100 |
| Desmodur HL [g] | 0 | 0 | 420 | 190 | 0 | 0 | 420 | 190 |
| Epoxysilan-/Aminosilan-Addukt *AD1* [g] | 0 | 0 | 0 | 0 | 60 | 30 | 30 | 30 |
| MEK [g] | 0 | 380 | 380 | 380 | 0 | 380 | 380 | 380 |

### Untergrundvorbereitung und Applikation des Primers

- Untergrund: Bezugsquelle
- ABS: Firma Rocholl, Schönbrunn, Deutschland
- EP-GFK: Firma Rocholl, Schönbrunn, Deutschland
- PC: Firma Rocholl, Schönbrunn, Deutschland
- PDMS-PC: Firma Angst+Pfister, Zürich, Schweiz

Die Untergründe wurden mit Isopropanol gereinigt. Bei PDMS-PC wurde vorgängig die Oberfläche mit Sika® Activator (erhältlich von Sika Schweiz AG) mittels Tuch aktiviert. Nach einer Wartezeit von 10 Minuten wurde der Primer auftragen.

### Applikation des Klebstoffs und Testmethoden

Nach einer in Tabelle 2 spezifizierten Wartezeit t nach der Applikation des Primers wurde auf den Primer eine Klebstoffraupe eines Polyurethanklebstoff appliziert. Es handelte sich hierbei um SikaTack®-Ultrafast (erhältlich von Sika Schweiz AG) sowie Sikaflex®-250 DM-1 (erhältlich von Sika Schweiz AG). Der Klebstoff wurde nach einer Aushärtezeit von 7 Tagen Klimaraumlagerung (23°C, 50% rel. Luftfeuchtigkeit) getestet.

Die Haftung des Klebstoffes wurde mittels 'Raupentest' getestet. Hierbei wird am Ende knapp über der Klebefläche eingeschnitten. Das eingeschnittene Ende der Raupe wird mit einer Rundzange Zange festgehalten und vom Untergrund gezogen. Dies geschieht durch vorsichtiges Aufrollen der Raupe auf die Zangenspitze, sowie Plazieren eines Schnittes senkrecht zur Raupenziehrichtung bis auf den blanken Untergrund. Die Raupenabziehgeschwindigkeit ist so zu wählen, dass ca. alle 3 Sekunden ein Schnitt gemacht werden muss. Die Teststrecke muss mindestens 8 cm entsprechen. Beurteilt wird der nach dem Abziehen der Raupe auf dem Untergrund zurückbleibende Klebestoff (Kohäsionsbruch). Die Bewertung der Hafteigenschaften erfolgt durch Abschätzen der kohäsiven Anteils der Haftfläche:
1 = > 95 % Kohäsionsbruch
2 = 75 - 95 % Kohäsionsbruch
3 = 25 - 75 % Kohäsionsbruch
4 = < 25 % Kohäsionsbruch
5 = adhäsiver Bruch

Durch den Zusatz "P" wird angegeben, dass der Primer sich vom Untergrund ablöst, und deshalb die Haftung des Primers auf dem Untergrund eine Schwachstelle darstellt. Testresultate mit Kohäsionsbrüchen von weniger als 75% gelten als ungenügend.

### Resultate

Tabelle 2 zeigt die Resultate der Haftprüfungen der Beispiele *PR1* bis *PR8*. Einerseits sind in dieser Tabelle die Haftungsresultate auf beispielhaft problematischen Untergründen und sowohl bei kurzen und insbesondere langen Wartezeiten zwischen Applikation des Primers und der Klebstoffe dargestellt.

**Tabelle 2. Haftungsresultate auf problematischen Polymeruntergründen bei unterschiedlichen Wartezeiten t zwischen Applikation des Primers und des Klebstoffs.**

| **Kurze Wartezeiten** | | | | | | | | |
|---|---|---|---|---|---|---|---|---|
| Beispiel | *PR1* | *PR2* | *PR3* | *PR4* | *PR5* | *PR6* | *PR7* | *PR8* |
| EP-GFK (***t*=10 min**) | | | | | | | | |
| SikaTact®-Ultrafast | 1 | 1 | 1 | 1 | 1 | 1 | 1 | 1 |
| Sikaflex®-250 DM-1 | 2 | 1 | 1 | 1 | 2 | 1 | 5 | 1 |
| | | | | | | | | |

| PC (***t*=10 min**) | | | | | | | | |
|---|---|---|---|---|---|---|---|---|
| SikaTack®-Ultrafast | 1 | 5P | 1 | 1 | 1 | 5P | 1 | 1 |
| Sikaflex®-250 DM-1 | 2 | 4P | 4 | 1 | 1 | 5P | 4 | 1 |
| | | | | | | | | |

| PDMS-PC (***t*=10 min**) | | | | | | | | |
|---|---|---|---|---|---|---|---|---|
| SikaTack®-Ultrafast | 3 | 5P | 4P | 1 | 3 | 5P | 3 | 1 |
| Sikaflex®-250 DM-1 | 3 | 5P | 3P | 1 | 3 | 2P | 4 | 1 |
| | | | | | | | | |

| **Lange Wartezeiten** | | | | | | | | |
|---|---|---|---|---|---|---|---|---|
| Beispiel | *PR1* | *PR2* | *PR3* | *PR4* | *PR5* | *PR6* | *PR7* | *PR8* |
| EP-GFK (***t*=17 Tage**) | | | | | | | | |
| SikaTack®-Ultrafast | 5P | 5P | 5P | 2 | 3P | 2 | 5P | 1 |
| Sikaflex®-250 DM-1 | 5P | 5P | 5P | 2 | 2P | 2 | 5P | 1 |
| | | | | | | | | |

| PC (***t* = 12 Tage**) | | | | | | | | |
|---|---|---|---|---|---|---|---|---|
| SikaTack®-Ultrafast | 5 | 5 | 4 | 4 | 5 | 5 | 4 | 2 |
| Sikaflex®-250 DM-1 | 5 | 5 | 5 | 4 | 5 | 5 | 4 | 2 |
| | | | | | | | | |

| PDMS-PC (***t*=12 Tage**) | | | | | | | | |
|---|---|---|---|---|---|---|---|---|
| SikaTack®-Ultrafast | 5 | 5 | 5 | 5 | 5 | 5 | 5 | 2 |
| Sikaflex®-250 DM-1 | 5 | 5 | 5 | 5 | 5 | 5 | 5 | 2 |

Es ist aus Tabelle 2 klar ersichtlich, dass das Beispiel *PR8* als eine erfindungsgemässe Primerzusammensetzung auf allen problematischen Untergründen insbesondere PDMS-PC und PC, im Vergleich zu den Vergleichsbespielen stets ausgezeichnete Haftung aufweist. Insbesondere ist bei diesem Vergleich auf den langen Einfluss der langen Offenzeiten der erfindungsgemässen Zusammensetzungen zu achten. Es zeigt sich zwar, dass bei gewissen Vergleichsbeispielen wie *PR4* und *PR5* zwar bei kurzen Wartezeiten gute Haftung aufweisen, aber bei längeren Wartezeiten ist dies nicht mehr der Fall. Gute Haftung bei langen Wartezeiten sind lediglich mit erfindungsgemässen Zusammensetzungen zu erreichen, wie das Beispiel *PR8* veranschaulicht.

## Patentansprüche

1. Primerzusammensetzung umfassend
- mindestens ein Polyurethanprepolymer **A** mit Isocyanatendgruppen;
- mindestens ein aliphatische Polyisocyanat **B**
- mindestens ein aromatisches Polyisocyanat **C**
- mindestens ein Reaktionsprodukt **D** erhältlich aus mindestens einem Epoxysilan und mindestens einem Aminosilan oder aus mindestens einem Epoxysilan und mindestens einem Mercaptosilan.

2. Primerzusammensetzung gemäss Anspruch 1, **dadurch gekennzeichnet, dass** das Polyurethanprepolymer **A** hergestellt wird aus mindestens einem Polyol und mindestens einem Polyisocyanat.

3. Primerzusammensetzung gemäss Anspruch 2, **dadurch gekennzeichnet**, das Polyol ein Polyoxyalkylenpolyol ist.

4. Primerzusammensetzung gemäss Anspruch 3, **dadurch gekennzeichnet**, das Polyol ein Polyoxypropylenpolyol, insbesondere ein Polyoxypropylendiol oder -triol ist.

5. Primerzusammensetzung gemäss einem der Ansprüche 2 bis 4, **dadurch gekennzeichnet, dass** das Polyol ein Molekulargewicht von 250 - 20'000 g/mol, insbesondere 500 - 10'000 g/mol, vorzugsweise 800 - 4'000 g/mol aufweist.

6. Primerzusammensetzung gemäss einem der vorhergehenden Ansprüche, **dadurch gekennzeichnet, dass** das aliphatische Polyisocyanat **B** ein aliphatisch NCO-gruppentragendes Isocyanurat **B1** und/oder ein aliphatisch NCO-gruppentragendes Biuret **B2** ist.

7. Primerzusammensetzung gemäss Anspruch 6, **dadurch gekennzeichnet, dass** das aliphatische NCO-gruppentragendes Isocyanurat **B1** ein IPDI-Isocyanurat ist.

8. Primerzusammensetzung gemäss Anspruch 6 oder 7, **dadurch gekennzeichnet, dass** das aliphatisch NCO-gruppentragendes Biuret **B2** ein HDI- Biuret ist.

9. Primerzusammensetzung gemäss einem der vorhergehenden Ansprüche, **dadurch gekennzeichnet, dass** das aromatische Polyisocyanat **C** ein aromatisch NCO-gruppentragendes Isocyanurat ist.

10. Primerzusammensetzung gemäss Anspruch 9, **dadurch gekennzeichnet, dass** das aromatische Polyisocyanat **C** ein aromatisch NCO-gruppentragendes Isocyanurat, welches aus Toluoldiisocyanat und Hexamethylendiisocyanat hergestellt werden kann.

11. Primerzusammensetzung gemäss einem der vorhergehenden Ansprüche, **dadurch gekennzeichnet, dass** für das für die Herstellung des Reaktionsproduktes **D** verwendete Epoxysilan ein Epoxydimethoxymethylsilan, ein Epoxytrimethoxysilan oder ein Epoxytriethoxysilan, vorzugsweise 2-(3,4-epoxycyclohexyl)-ethyltrimethoxysilan 3-Glycidyloxy-propyl-trimethoxysilan oder 3-Glycidyloxy-propyl-triethoxysilan, insbesondere 3-Glycidyloxy-propyl-trimethoxysilan ist.

12. Primerzusammensetzung gemäss einem der vorhergehenden Ansprüche, **dadurch gekennzeichnet, dass** für das für die Herstellung des Reaktionsproduktes **D** verwendete Aminosilan ein Aminodiethoxymethylsilan, Aminodimethoxymethylsilan, Amino- trimethoxysilan oder ein Amino-triethoxysilan, insbesondere ein Trimethoxysilan mit primären Aminogruppen oder ein insbesondere ein Triethoxysilan mit primären Aminogruppen, vorzugsweise 3-(2-Aminoethylamino)-propyltrimethoxysilan oder 3-Aminopropyltrimethoxysilan ist.

13. Primerzusammensetzung gemäss einem der vorhergehenden Ansprüche, **dadurch gekennzeichnet, dass** das Reaktionsproduktes **D** aus 3-Glycidyloxy-propyl-trimethoxysilan und 3-Aminopropyltrimethoxysilan hergestellt wird.

14. Primerzusammensetzung gemäss einem der vorhergehenden Ansprüche, **dadurch gekennzeichnet, dass** für die Herstellung des Reaktionsproduktes **D** Epoxysilan und Aminosilan im Verhältnis von Anzahl aktiven-Aminwasserstoffe / Anzahl Epoxygruppen = 3:1 - 1:3, insbesondere 2:1 - 1:1.5, bevorzugt 2:1 - etwa 1:1, eingesetzt werden.

15. Primerzusammensetzung gemäss einem der Ansprüche 1-11 vorhergehenden Ansprüche, **dadurch gekennzeichnet, dass** für die Herstellung des Reaktionsproduktes **D** Epoxysilan und Mercaptosilan im Verhältnis von Anzahl Mercaptogruppen / Anzahl Epoxygruppen =1.5:1 - 1:1.5, insbesondere 1.2:1 - 1:1.2, bevorzugt etwa 1:1, eingesetzt werden.

16. Primerzusammensetzung gemäss einem der vorhergehenden Ansprüche, **dadurch gekennzeichnet, dass** zusätzlich mindestens ein bei Raumtemperatur nicht mit Isocyanaten reaktives Lösungsmittel vorhanden ist.

17. Primerzusammensetzung gemäss Anspruch 16, **dadurch gekennzeichnet, dass** das Lösungsmittel eine Dialkyl-Keton oder ein Alkylcarbonsäureester mit C1- bis C6- Alkylsubstituenten.

18. Primerzusammensetzung gemäss Anspruch 17, **dadurch gekennzeichnet, dass** das Lösungsmittel ausgewählt ist aus der Gruppe Methylethylketon, Aceton, Ethylacetat, Butylacetat, Hexylacetat und Diethylmalonat ist.

19. Primerzusammensetzung gemäss einem der vorhergehenden Ansprüche, **dadurch gekennzeichnet, dass** zusätzlich mindestens ein Katalysator, vorzugsweise ein zinnorganischer Katalysator, insbesondere ausgewählt aus der Gruppe Dibutylzinndilaurat, Dibutylzinndichlorid, Zinn-Thioesterkomplexe, Mono-n-butylzinntrichloride, Di-n-butylzinnoxid, Di-n-butylzinndiacetat, Dibutylzinncarboxylat, vorhanden ist.

20. Primerzusammensetzung gemäss einem der vorhergehenden Ansprüche, **dadurch gekennzeichnet, dass** zusätzlich mindestens ein Silan ausgewählt aus der Gruppe 3-Glycidyloxypropyltrimethoxysilan, 3-Glycidyloxypropyltriethoxysilan, 2-(3,4-epoxycyclohexyl)-ethyltrimethoxysilan, 3-Ureidopropyltriethoxysilan, 3-(4,5-Dihydroimidazolyl)propyl-triethoxysilan, 3-Methacryloxypropyltrimethoxysilan (monomerisch oder polymerisiert), Vinyltrimethoxysilan (monomerisch oder polymerisiert), Vinyltriethoxysilan (monomerisch oder polymerisiert), Vinyltris(2-methoxyethoxy)silan (monomerisch oder polymerisiert), 1,3,5-tris[3-(Trimethoxysilyl)propyl]-1,3,5-triazine-2,4,6(1H,3H,5H)-trion, Methyltrimethoxysilan, Methyltriethoxysilan, Trimethoxypropylsilan, Triethoxypropylsilan, 2-Methylpropyltrimethoxysilan, Triethoxyisobutylsilan, Octyltrimethoxysilan, Octyltriethoxysilan, Hexadecyltrimethoxysilan, Cyclohexyldimethoxymethylsilan, 3-Isocyanatopropyltrimethoxy-silan, 3-Isocyanatopropyltriethoxysilan, 3-Methacryloxypropyltriethoxysilan (monomerisch oder polymerisiert), insbesondere 3-Glycidyloxypropyltrimethoxysilan und 3-Glycidyloxypropyltriethoxysilan, vorhanden ist.

21. Primerzusammensetzung gemäss einem der vorhergehenden Ansprüche, **dadurch gekennzeichnet, dass** mindestens ein Füllstoff, insbesondere Russ, vorhanden ist.

22. Verwendung der Primerzusammensetzung gemäss einem der Ansprüche 1 bis 21 als Primer für Klebstoffe, Dichtmassen oder Bodenbeläge, insbesondere 1-komponentige feuchtigkeitshärtenende Polyurethanklebstoffe oder -dichtmassen auf Basis von Polyurethanen oder Polyurethan-Silan-Hybriden.

23. Verfahren **dadurch gekennzeichnet, dass** eine Primerzusammensetzung gemäss einem der Ansprüche 1 bis 21 mittels Pinsel, Filz, Tuch oder Schwamm auf ein Substrat manuell oder automatisch oder mittels Roboter aufgetragen wird.

24. Verfahren gemäss Anspruch 23, **dadurch gekennzeichnet, dass** das Substrat Glas, Glaskeramik oder ein Kunststoff, insbesondere PDMS-PC oder PDMS-PMMA, ist.

## Claims

1. A primer composition comprising
- at least one polyurethane prepolymer **A** having isocyanate end groups,
- at least one aliphatic polyisocyanate **B,**
- at least one aromatic polyisocyanate **C,**
- at least one reaction product **D** obtainable from at least one epoxysilane and at least one aminosilane or from at least one epoxysilane and at least one mercaptosilane.

2. The primer composition of claim 1, **characterized in that** the polyurethane prepolymer **A** is prepared from at least one polyol and at least one polyisocyanate.

3. The primer composition of claim 2, **characterized in that** the polyol is a polyoxyalkylene polyol.

4. The primer composition of claim 3, **characterized in that** the polyol is a polyoxypropylene polyol, in particular a polyoxypropylene diol or triol.

5. The primer composition of any one of claims 2 to 4, **characterized in that** the polyol has a molecular weight of 250-20 000 g/mol, in particular 500-10 000 g/mol, preferably 800-4000 g/mol.

6. The primer composition of any one of the preceding claims, **characterized in that** the aliphatic polyisocyanate **B** is an aliphatically NCO-bearing isocyanurate **B1** and/or an aliphatically NCO-bearing biuret **B2.**

7. The primer composition of claim 6, **characterized in that** the aliphatic NCO-bearing isocyanurate **B1** is an IPDI-isocyanurate.

8. The primer composition of claim 6 or 7, **characterized in that** the aliphatically NCO-bearing biuret **B2** is an HDI-biuret.

9. The primer composition of any one of the preceding claims, **characterized in that** the aromatic polyisocyanate **C** is an aromatically NCO-bearing isocyanurate.

10. The primer composition of claim 9, **characterized in that** the aromatic polyisocyanate **C** is an aromatically NCO-bearing isocyanurate which can be prepared from toluene diisocyanate and hexamethylene diisocyanate.

11. The primer composition of any one of the preceding claims, **characterized in that** the epoxysilane used for preparing the reaction product **D** is an epoxydimethoxymethylsilane, an epoxytrimethoxysilane or an epoxytriethoxysilane, preferably 2-(3,4-epoxycyclohexyl)ethyltrimethoxysilane, 3-glycidyloxypropyltrimethoxysilane or 3-glycidyloxypropyltriethoxysilane, especially 3-glycidyloxypropyltrimethoxysilane.

12. The primer composition of any one of the preceding claims, **characterized in that** the aminosilane used for preparing the reaction product **D** is an aminodiethoxymethylsilane, aminodimethoxymethylsilane, aminotrimethoxysilane or an aminotriethoxysilane, in particular a trimethoxysilane having primary amino groups or in particular a triethoxysilane having primary amino groups, preferably 3-(2-aminoethylamino)propyltrimethoxysilane or 3-aminopropyltrimethoxysilane.

13. The primer composition of any one of the preceding claims, **characterized in that** the reaction product **D** is prepared from 3-glycidyloxypropyltrimethoxysilane and 3-aminopropyltrimethoxysilane.

14. The primer composition of any one of the preceding claims, **characterized in that** for preparing the reaction product **D** epoxysilane and aminosilane are used in a ratio of the number of active amine hydrogens/number of epoxy groups = 3:1 - 1:3, especially 2:1 - 1:1.5, preferably 2:1 - about 1:1.

15. The primer composition of any one of the claims 1-11, **characterized in that** for preparing the reaction product **D** epoxysilane and mercaptosilane are used in a ratio of the number of mercapto groups/number of epoxy groups = 1.5:1 - 1:1.5, especially 1.2:1 - 1:1.2, preferably about 1:1.

16. The primer composition of any one of the preceding claims, **characterized in that** it further comprises at least one solvent which is not isocyanate-reactive at room temperature.

17. The primer composition of claim 16, **characterized in that** the solvent is a dialkyl ketone or an alkyl carboxylic acid having C1 to C6 alkyl substituents.

18. The primer composition of claim 17, **characterized in that** the solvent is selected from the group consisting of methyl ethyl ketone, acetone, ethyl acetate, butyl acetate, hexyl acetate and diethyl malonate.

19. The primer composition of any one of the preceding claims, **characterized in that** it further comprises at least one catalyst, preferably an organotin catalyst, selected in particular from the group consisting of dibutyltin dilaurate, dibutyltin dichloride, tin-thioester complexes, mono-n-butyltin trichloride, di-n-butyltin oxide, di-n-butyltin diacetate, and dibutyltin carboxylate.

20. The primer composition of any one of the preceding claims, **characterized in that** it further comprises at least one silane selected from the group consisting of 3-glycidyloxypropyltrimethoxysilane, 3-glycidyloxypropyltriethoxysilane, 2-(3,4-epoxyCyclohexyl)ethyltrimethoxysilane, 3-ureidopropyltriethoxysilane, 3-(4,5-dihydroimidazolyl)propyltriethoxysilane, 3-methacryloyloxypropyltrimethoxysilane (monomeric or polymerized), vinyltrimethoxysilane (monomeric or polymerized), vinyltriethoxysilane (monomeric or polymerized), vintyltris(2-methoxyethoxy)silane (monomeric or polymerized), 1,3,5-tris[3-(trimethoxysilyl)-propyl]-1,3,5-triazine-2,4,6-(1H,3H,5H)-trione, methyltrimethoxysilane, methyltriethoxysilane, trimethoxypropylsilane, triethoxypropylsilane, 2-methylpropyltrimethoxysilane, triethoxyisobutylsilane, octyltrimethoxysilane, octyltriethoxysilane, hexadecyltrimethoxysilane, cyclohexyldimethoxymethylsilane, 3-isocyanatopropyltrimethoxysilane, 3-isocyanatopropyltriethoxysilane, 3-methacryloyloxypropyltriethoxysilane (monomeric or polymerized), especially 3-glycidyloxypropyltrimethoxysilane and 3-glycidyloxypropyltriethoxysilane.

21. The primer composition of any one of the preceding claims, **characterized in that** it comprises at least one filler, especially carbon black.

22. The use of the primer composition of any one of claims 1 to 21 as a primer for adhesives, sealants or floor coverings, especially 1-component moisture-curing polyurethane adhesives or sealants based on polyurethanes or polyurethane-silane hybrids.

23. A method **characterized in that** a primer composition of any one of claims 1 to 21 is applied by means of brush, felt, cloth or sponge to a substrate by hand or automatically or by means of robots.

24. The method of claim 23, **characterized in that** the substrate is glass, glass ceramic or a plastic, especially PDMS-PC or PDMS-PMMA.

## Revendications

1. Composition de couche de fond comprenant .
- au moins un prépolymère de polyuréthane A présentant des groupes terminaux isocyanate,
- au moins un polyisocyanate aliphatique B,
- au moins un polyisocyanate aromatique C,
- au moins un produit de réaction D obtenu à partir d'au moins un époxysilane et d'au moins un aminosilane ou à partir d'au moins un époxysilane et d'au moins un mercaptosilane.

2. Composition de couche de fond selon la revendication 1, **caractérisée en ce que** le prépolymère de polyuréthane A est préparé à partir d'au moins un polyol et d'au moins un polyisocyanate.

3. Composition de couche de fond selon la revendication 2, **caractérisée en ce que** le polyol est un polyoxyalkylène polyol.

4. Composition de couche de fond selon la revendication 3, **caractérisée en ce que** le polyol est un polyoxypropylène polyol et en particulier un polyoxypropylène diol ou un polyoxypropylène triol.

5. Composition de couche de fond selon l'une des revendications 2 à 4, **caractérisée en ce que** le polyol présente un poids moléculaire de 250 à 20 000 g/mole, en particulier de 500 à 10 000 g/mole et de préférence de 800 à 4 000 g/mole.

6. Composition de couche de fond selon l'une des revendications précédentes, **caractérisée en ce que** le polyisocyanate aliphatique B est un isocyanurate aliphatique B1 portant des groupes NCO et/ou un biuret aliphatique B2 portant des groupes NCO.

7. Composition de couche de fond selon la revendication 6, **caractérisée en ce que** l'isocyanurate aliphatique B1 portant des groupes NCO est un isocyanurate IPDI.

8. Composition de couche de fond selon les revendications 6 ou 7, **caractérisée en ce que** le biuret aliphatique B2 portant des groupes NCO est un biuret HDI.

9. Composition de couche de fond selon l'une des revendications précédentes, **caractérisée en ce que** le polyisocyanate aromatique C est un isocyanurate aromatique portant des groupes NCO.

10. Composition de couche de fond selon la revendication 9, **caractérisée en ce que** le polyisocyanate aromatique C est un isocyanurate aromatique portant des groupes NCO qui peut être préparé à partir de diisocyanate de toluène et de diisocyanate d'hexaméthylène.

11. Composition de couche de fond selon l'une des revendications précédentes, **caractérisée en ce que** l'époxysilane utilisé pour la préparation du produit de réaction D est un époxydiméthoxyméthylsilane, un époxytriméthoxysilane ou un époxytriéthoxysilane, de préférence le 2-(3,4-époxycyclohexyl)éthyltriméthoxysilane, le 3-glycidyloxypropyltriméthoxysilane ou le 3-glycidyloxypropyltriéthoxysilane et en particulier le 3-glycidyloxypropyltriméthoxysilane.

12. Composition de couche de fond selon l'une des revendications précédentes, **caractérisée en ce que** l'aminosilane utilisé pour la préparation du produit de réaction D est un aminodiéthoxyméthylsilane, un aminodiméthoxyméthylsilane, un aminotriméthoxysilane ou un aminotriéthoxysilane, en particulier un triméthoxysilane comptant des groupes amino primaires ou en particulier un triéthoxysilane comptant des groupes amino primaires, de préférence le 3-(2-aminoéthylamino)propyltriméthoxysilane ou le 3-aminopropyltriméthoxysilane.

13. Composition de couche de fond selon l'une des revendications précédentes, **caractérisée en ce que** le produit de réaction D est préparé à partir de 3-glycidyloxypropyltriméthoxysilane et de 3-aminopropyltriméthoxysilane.

14. Composition de couche de fond selon l'une des revendications précédentes, **caractérisée en ce que** l'époxysilane et l'aminosilane utilisés pour la préparation du produit de réaction D sont utilisés dans un rapport entre le nombre des hydrogènes aminoactifs et le nombre des groupes époxy de 3:1 - 1:3, en particulier de 2:1 - 1:1,5 et de préférence de 2:1 - environ 1:1.

15. Composition de couche de fond selon l'une des revendications 1-11 qui précèdent, **caractérisée en ce que** l'époxysilane et le mercaptosilane utilisés pour la préparation du produit de réaction D sont utilisés dans un rapport entre le nombre des groupes mercapto et le nombre des groupes époxy de 1,5:1 à 1:1,5, en particulier de 1,2:1 à 1:1,2 et de préférence d'environ 1:1.

16. Composition de couche de fond selon l'une des revendications précédentes, **caractérisée en ce qu'**elle présente en supplément au moins un solvant ne réagissant pas avec les isocyanates à température ambiante.

17. Composition de couche de fond selon la revendication 16, **caractérisée en ce que** le solvant est une dialkylcétone ou un ester d'acide alkylcarboxylique dont le substituant alkyle est en C₁ à C₆.

18. Composition de couche de fond selon la revendication 17, **caractérisée en ce que** le solvant est sélectionné dans l'ensemble constitué de la méthyléthylcétone, de l'acétone, de l'acétate d'éthyle, de l'acétate de butyle, de l'acétate d'hexyle et du malonate de diéthyle.

19. Composition de couche de fond selon l'une des revendications précédentes, **caractérisée en ce qu'**elle présente en supplément au moins un catalyseur, de préférence un catalyseur organique d'étain en particulier sélectionné dans l'ensemble constitué du dilaurate de dibutylétain, du dichlorure de dibutylétain, des complexes d'étain et de thioester, des trichlorures de mono-n-butylétain, de l'oxyde de di-n-butylétain, du diacétate de di-n-butylétain et du carboxylate de dibutylétain.

20. Composition de couche de fond selon l'une des revendications précédentes, **caractérisée en ce qu'**elle présente en supplément au moins un silane sélectionné dans l'ensemble constitué du 3-glycidyloxypropyltriméthoxysilane, du 3-glycidyloxypropyltriéthoxysilane, du 2-(3,4-époxycyclohexyl)-éthyltriméthoxysilane, du 3-uréidopropyltriéthoxysilane, du 3- (4, 5-dihydroimidazolyl)propyltriéthoxysilane, du 3-méthacryloxypropyltriméthoxysilane (monomère ou polymérisé), du vinyltriméthoxysilane (monomère ou polymérisé), du vinyltriéthoxysilane (monomère ou polymérisé), du vinyltris (2-méthoxyéthoxy) silane (monomère ou polymérisé), de la 1, 3, 5-tris[3-(triméthoxysilyl)propyl]-1,3,5-triazine-2,4,6(1H,3H,5H)-trione, du méthyltriméthoxysilane, du méthyltriéthoxysilane, du triméthoxypropylsilane, du triéthoxypropylsilane, du 2-méthylpropyltriméthoxysilane, du triéthoxyisobutylsilane, de l'octyltriméthoxysilane, de l'octyltriéthoxysilane, de l'hexadécyltriméthoxysilane, du cyclohexyldiméthoxyméthylsilane, du 3-isocyanatopropyltriméthoxysilane, du 3-isocyanatopropyltriéthoxysilane, du 3-méthacryloxypropyltriéthoxysilane (monomère ou polymérisé) et en particulier du 3-glycidyloxypropyltriméthoxysilane et du 3-glycidyloxypropyltriéthoxysilane.

21. Composition de couche de fond selon l'une des revendications précédentes, **caractérisée en ce qu'**elle présente au moins une charge et en particulier du noir de carbone.

22. Utilisation de la composition de couche de fond selon l'une des revendications 1 à 21 comme couche de fond pour adhésifs, pâtes d'étanchéité ou revêtements de sol, en particulier des adhésifs ou pâtes d'étanchéité au polyuréthane à un composant, durcissant à l'humidité, à base de polyuréthanes ou d'hybrides de polyuréthane et de silane.

23. Procédé **caractérisé en ce qu'**une composition de couche de fond selon l'une des revendications 1 à 21 est appliquée au pinceau, au feutre, au chiffon ou à l'éponge sur un substrat, manuellement, automatiquement ou au moyen d'un robot.

24. Procédé selon la revendication 23, **caractérisé en ce que** le substrat est en verre, en vitrocéramique ou en matière synthétique, en particulier en PDMS-PC ou en PDMS-PMMA.
